# EUROPEAN PATENT APPLICATION

(11) **EP 4 700 377 A1**
(43) Date of publication of application: **25.02.2026**
(21) Application number: 25197322.8
(22) Date of filing: 21.08.2025
(51) Int. Cl.: G01N 23/083, G01V 5/22

(54) **X-RAY INSPECTION APPARATUS**

(30) Priority: 22.08.2024 JP 2024140632
(71) Applicant: Ishida Co., Ltd., Kyoto-shi Kyoto 606-8392 (JP)
(72) Inventor: KOBAYASHI, Kotaro, Ritto-shi, Shiga, 520-3026 (JP); HORI, Hiroshi, Ritto-shi, Shiga, 520-3026 (JP); KONDO, Shingo, Ritto-shi, Shiga, 520-3026 (JP)
(74) Representative: Global IP Europe Patentanwaltskanzlei

(57) **Abstract**

An X-ray inspection apparatus 1 includes: a conveying unit 5 which transports an article G; an X-ray irradiation unit 6 which irradiates the article G, transported to an inspection area 4 by the conveying unit 5, with X-rays; an X-ray detection unit 7 which detects the X-rays transmitted through the article G; an inspection unit 10 which inspects the article G based on a detection result of the X-ray detection unit 7; a flexible X-ray shielding member 60 that prevents the X-rays from leaking from a conveying path 4c to the inspection area and is suspended from the conveying path 4c; and a front member 50 that is disposed on the upstream side of the X-ray shielding member 60 so as to overlap the X-ray shielding member 60 and has higher impact resistance or abrasion resistance than the X-ray shielding member 60.

## Description

### TECHNICAL FIELD

An aspect of the present invention relates to an X-ray inspection apparatus.

### BACKGROUND

X-ray inspection apparatuses equipped with an X-ray leakage prevention member (such as a shielding curtain) for preventing leakage of X-rays are known. Such an X-ray leakage prevention member is formed of a flexible material containing tungsten or the like. However, such an X-ray leakage prevention member has a large surface frictional resistance. For this reason, if an article to be inspected is lightweight or has a shape that is easily caught, the article may be caught and stop or the posture of the article may change when the article comes into contact with the X-ray leakage prevention member during transportation. Accordingly, there were cases where the inspection could not be carried out normally. For these problems, for example, in Japanese Unexamined Patent Publication No. 2002-228601, a flexible slip sheet formed of a material with a low surface friction coefficient and overlaps the front side of the X-ray leakage prevention member in the direction in which the article is transported, thereby stabilizing the transport of the article while preventing leakage of X-rays.

### SUMMARY

However, in the conventional X-ray inspection apparatus, even if the transport of articles can be stabilized, the slip sheet may be worn down and damaged by contact with the articles. As a result, there is a risk of foreign matter being mixed into the articles.

Therefore, an object of an aspect of the present invention is to provide an X-ray inspection apparatus capable of reducing the risk of foreign matter being mixed into an article as an inspection target while preventing leakage of X-rays.
(1) An X-ray inspection apparatus according to an aspect of the present invention includes: a conveying unit configured to transport an article; an X-ray irradiation unit configured to irradiate the article with X-rays, the article having been transported to an inspection area by the conveying unit; an X-ray detection unit configured to detect the X-rays transmitted through the article; an inspection unit configured to inspect the article based on a detection result of the X-ray detection unit; a flexible X-ray shielding member configured to prevent the X-rays from leaking from a conveying path for conveying the article into the inspection area or conveying the article out from the inspection area and being suspended from the conveying path; and a front member disposed on an upstream side of the X-ray shielding member so as to overlap the X-ray shielding member and having higher impact resistance or abrasion resistance than the X-ray shielding member.
   In the X-ray inspection apparatus of this configuration, since the front member having impact resistance or abrasion resistance is provided on the upstream side of the X-ray shielding member, the frequency with which articles transported from the upstream side come into direct contact with the X-ray shielding member is reduced. Accordingly, the possibility of damage to the X-ray shielding member can be reduced. As a result, the risk of foreign matter being mixed into the article to be inspected can be reduced while preventing leakage of X-rays.
(2) In the X-ray inspection apparatus of (1) above, at least an outer surface of the front member may be formed of a metal material. In this configuration, the front member having impact resistance or abrasion resistance compared to the X-ray shielding member can be easily formed.
(3) In the X-ray inspection apparatus of (1) above, the front member may be a thin plate-like plate spring member formed of a metal material. In this configuration, the front member is made thin and can be restored to its original shape even if the front member is deformed by collision with the article. Further, since the front member can be made thin, the impact when the front member collides with the article is reduced, and the transportation of the article can be stabilized.
(4) In the X-ray inspection apparatus of any one of (1) to (3) above, a friction coefficient of a surface of the front member may be smaller than a friction coefficient of the X-ray shielding member. In this configuration, the front member having impact resistance or abrasion resistance compared to the X-ray shielding member can be easily formed.
(5) In the X-ray inspection apparatus of any one of (1) to (4) above, the front member may be suspended from the conveying path, and, and a length of the front member extending from a base end on a fixed side to a tip on a hanging side may be shorter than a length of the X-ray shielding member extending from the base end to the tip. In this configuration, the lower end of the front member can be caused to not be in contact with the conveying unit while the lower end of the X-ray shielding member is in contact with the conveying unit. As a result, it is possible to prevent the leakage of X-rays while reducing the abrasion of the lower end of the front member.
(6) The X-ray inspection apparatus of (5) above further may include: a pivoting shaft configured to rotatably fix the X-ray shielding member and the front member and extending in a width direction perpendicular to both a transport direction of the conveying unit in the conveying path and a vertical direction; and a first restricting member provided on a downstream side of the pivoting shaft to maintain an tilted state so that the base end of the front member is located on the upstream side of the tip when viewed from the width direction and to restrict rotation toward the upstream side. In this configuration, since the front member is pressed by the first regulating member from the beginning, the passage of the article is further improved.
(7) The X-ray inspection apparatus of (6) above further may include: a second restricting member provided on the downstream side of the first restricting member to restrict the front member from pivoting downstream at a predetermined angle or more. In this configuration, it is possible to reduce the deterioration of the effect of suppressing leakage of X-rays due to the front member pivoting more than necessary.

According to an aspect of the present invention, it is possible to reduce the risk of foreign matter being mixed into an article to be inspected while preventing leakage of X-rays.

### BRIEF DESCRIPTION OF THE DRAWINGS

FIG. 1 is a front view of an X-ray inspection apparatus according to an embodiment.
FIG. 2 is a side view of the X-ray inspection apparatus of FIG. 1.
FIG. 3 is a front view showing a configuration in the vicinity of a conveyor and a shielding unit.
FIG. 4 is a perspective view of a downstream portion of the conveyor and the shielding unit as viewed obliquely from a downstream side.
FIG. 5 is a perspective view of the downstream portion of the conveyor and the shielding unit as viewed obliquely from an upstream side.
FIG. 6A is a view of a downstream end of the conveyor and the shielding unit as viewed from an upstream front side.
FIG. 6B is a view of the downstream end of the conveyor and the shielding unit as viewed from a downstream front side.
FIG. 7A is a view of a downstream end of a conveyor and a shielding unit according to a modified example as viewed from an upstream front side.
FIG. 7B is a view of the downstream end of the conveyor and the shielding unit according to the modified example as viewed from a downstream front side.

### DETAILED DESCRIPTION

Hereinafter, an embodiment of the present invention will be described with reference to the drawings. Furthermore, in the description of the drawings, the same elements are designated by the same reference numerals, and duplicated descriptions are omitted. Further, in this specification, "A or B" means the inclusion of either A or B, and does not exclude the inclusion of both A and B. In this specification, the terms "upstream" and "downstream" refer to the upstream and downstream in a transport direction A.

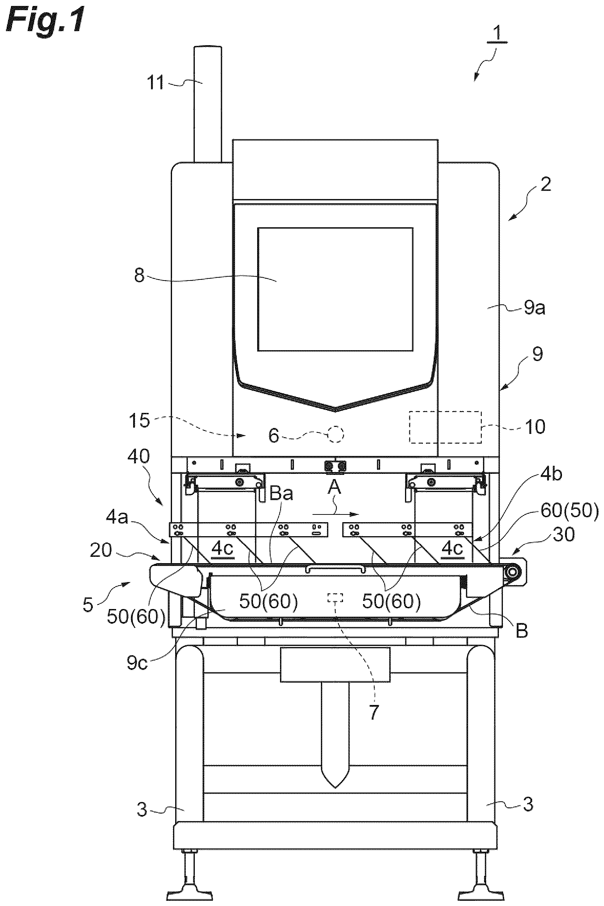

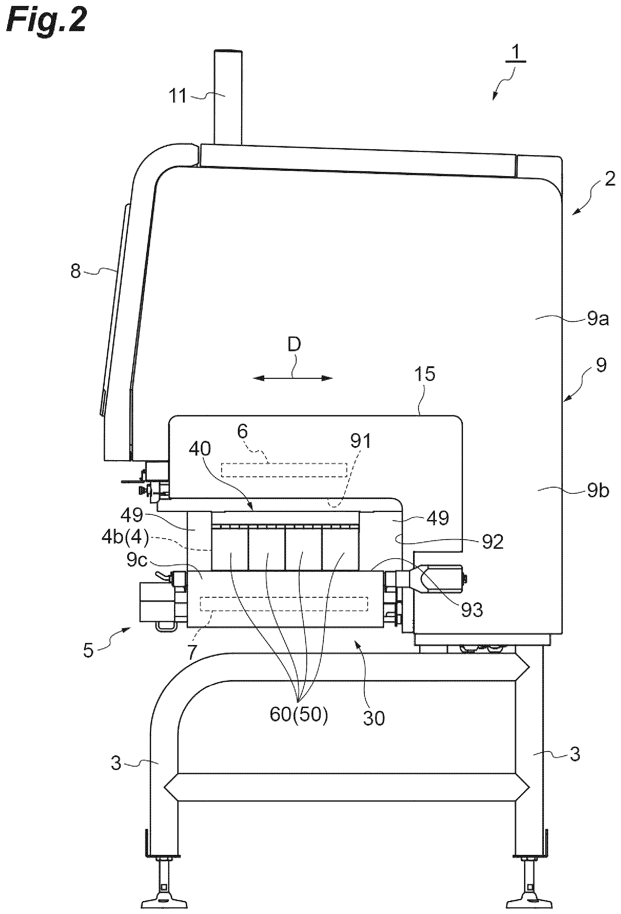

As shown in FIGS. 1 and 2, an X-ray inspection apparatus 1 includes a device main body 2, a support leg 3, and a conveyor (transport unit) 5. The support leg 3 supports the device main body 2. The device main body 2 has a housing 9 formed of a material capable of shielding electromagnetic waves such as X-rays. The housing 9 includes, for example, an upper portion 9a having a display operation unit 8 provided on a front surface, a back portion 9b extending vertically, and a lower portion 9c protruding forward from the back portion 9b.

The X-ray inspection apparatus 1 includes an inspection unit 15 incorporated in the device main body 2. The inspection unit 15 has an inspection chamber (inspection area) 4 provided at approximately the center of the height direction of the device main body 2. The inspection chamber 4 is provided with, for example, a shield box (not shown). The inspection unit 15 has an X-ray irradiation unit 6 and an X-ray detection unit 7 accommodated in the housing 9 of the device main body 2. The X-ray irradiation unit 6 is disposed in the upper portion 9a of the housing 9, and the X-ray detection unit 7 is disposed in the lower portion 9c of the housing 9. The inspection unit 15 further includes a control unit 10 provided, for example, in the upper portion 9a of the housing 9.

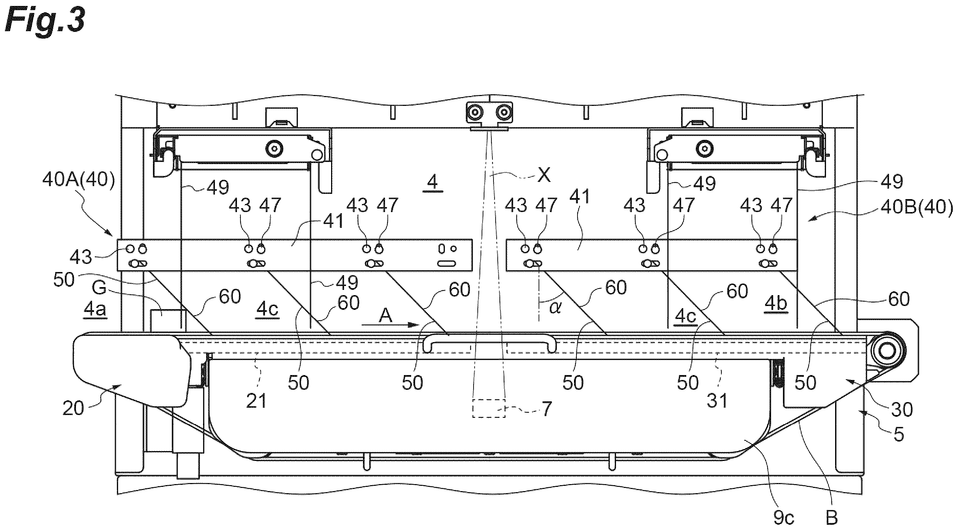

When viewed from the upstream side of the transport direction A, a first wall portion 91 of the upper portion 9a, a second wall portion 92 of the back portion 9b, and a third wall portion 93 of the lower portion 9c are formed in a U shape that opens forward. The front surface of the housing 9 in which the conveyor 5 is disposed is covered by a shielding cover (not shown) that is opened and closed during maintenance, for example. The inspection chamber 4 is a substantially rectangular parallelepiped space surrounded by these wall portions and the shielding cover. A rectangular entrance opening 4a is formed at the upstream end of the inspection chamber 4 in the transport direction A. A rectangular exit opening 4b is formed at the downstream end of the inspection chamber 4 in the transport direction A. The shape and size of the entrance opening 4a are equal to the shape and size of the exit opening 4b. A conveying path 4c for an article G (see FIG. 3) is formed between the entrance opening 4a and the inspection chamber 4 and between the inspection chamber 4 and the exit opening 4b.

The conveyor 5 transports the article G in the transport direction A. The conveyor 5 is provided to extend through the inspection chamber 4 in the transport direction A. In other words, the inspection unit 15 is provided so as to cover the conveyor 5.

The X-ray inspection apparatus 1 generates an X-ray transmission image of the article G while transporting the article G by the conveyor 5, and performs inspection of the article G (for example, inspection of the number of stored items, inspection of foreign matter contamination, inspection of missing items, inspection of cracks and chips, and the like) based on the X-ray transmission image. The article G is, for example, food. The conveyor 5 includes an infeed conveyor 20 which is disposed on the upstream side in the transport direction A and an outfeed conveyor 30 which is disposed on the downstream side in the transport direction A. The article G before inspection is conveyed into the inspection chamber 4 by the infeed conveyor 20. The article G after inspection is conveyed out from the inspection chamber 4 by the outfeed conveyor 30. The article G that is determined to be a defective product by the X-ray inspection apparatus 1 is sorted out of the production line by a sorting device (not shown) arranged on the downstream side of the outfeed conveyor 30. The article G that is determined to be a good product by the X-ray inspection apparatus 1 passes through the sorting device as it is.

The X-ray irradiation unit 6 irradiates the article G transported by the conveyor 5 with X-rays (electromagnetic waves). The X-ray irradiation unit 6 has, for example, an X-ray tube that emits X-rays and a collimator that spreads the X-rays emitted from the X-ray tube in a fan shape in a plane perpendicular to the transport direction A. The X-ray detection unit 7 detects the X-rays irradiated by the X-ray irradiation unit 6 and transmitted through the article G. The X-ray detection unit 7 is configured as, for example, a line sensor. Specifically, the X-ray detection unit 7 has a plurality of photodiodes arranged one-dimensionally along a horizontal direction perpendicular to the transport direction A and scintillators arranged on the X-ray incident side of each photodiode. In this case, in the X-ray detection unit 7, the X-rays incident on the scintillator are converted into light, and the light incident on each photodiode is converted into electrical signals.

The display operation unit 8 is provided on the upper portion 9a of the housing 9 and faces forward. The display operation unit 8 displays various information (that is, notifies the operator of the operating state) and receives input of various conditions. The display operation unit 8 is, for example, a liquid crystal display, and displays an operation screen for touch panel operation. In this case, the operator can input various conditions via the display operation unit 8. The display operation unit 8 notifies various abnormalities in the X-ray inspection apparatus 1. An alarm light 11, which also functions as a notification unit, is provided upright on the upper portion 9a of the housing 9.

The control unit 10 is disposed inside the device main body 2. The control unit 10 controls the operation of each part of the X-ray inspection apparatus 1. The control unit 10 is composed of a CPU (Central Processing Unit), ROM (Read Only Memory), RAM (Random Access Memory), or the like. The control unit 10 receives, as an input, a signal that is output from the X-ray detection unit 7 and subjected to A/D conversion. The control unit 10 functions as an inspection unit that generates an X-ray transmission image of the article G based on the signal output from the X-ray detection unit 7 and inspects the article G based on the X-ray transmission image.

Each of the infeed conveyor 20 and the outfeed conveyor 30 has known components such as a motor, a pulley, a timing belt, a drive roller, and a driven roller (all of which are not shown). The conveyor 5 has a transport belt B provided across the entirety of the infeed conveyor 20 and the outfeed conveyor 30, and drives the transport belt B at a predetermined speed. Accordingly, the conveyor 5 transports the article G at that traveling speed. The moving speed (transporting speed) of the transport belt B is adjustable. The article G is transported on a transport surface Ba of the transport belt B.

As shown in FIG. 3, the infeed conveyor 20 includes a frame 21 that supports the transport belt B via a pulley. Further, the outfeed conveyor 30 includes a frame 31 that supports the transport belt B via a pulley. The frames 21 and 31 are formed of metal such as stainless steel. A slight gap is formed between the frame 21 and 31 in the transport direction A. An X-ray passage area X is formed such that the X-ray passes through this gap from the X-ray irradiation unit 6 to the X-ray detection unit 7. This gap, that is, the passage area X extends along the width direction D (see FIG. 2). The width direction D is a direction intersecting both the transport direction A in the conveyor 5 and the opposing direction in which the X-ray irradiation unit 6 and the X-ray detection unit 7 face each other (the up and down direction in FIG. 2). In this embodiment, the transport direction A and the width direction D are horizontal directions, and the opposing direction between the X-ray irradiation unit 6 and the X-ray detection unit 7 is the up and down direction (vertical direction).

As shown in FIGS. 1 and 3, the inspection unit 15 inspects the article G by irradiation of the article G with X-rays while the article G is traveling from the entrance opening 4a to the exit opening 4b. In the inspection unit 15, a shield box and a shielding unit 40 (described later) prevent X-rays from leaking to the outside. The article G before inspection is conveyed into the inspection chamber 4 via the entrance opening 4a. The article G after inspection is conveyed out from the inspection chamber 4 via the exit opening 4b.

The X-ray inspection apparatus 1 includes the shielding unit 40 which is provided at least at both the entrance opening 4a and the exit opening 4b and shields X-rays leaking from the entrance opening 4a and the exit opening 4b to the outside. Hereinafter, the shielding unit 40 will be described in detail.

As shown in FIGS. 1 and 3, the shielding unit 40 prevents X-rays irradiated onto the article G from leaking from the entrance opening 4a and the exit opening 4b of the inspection chamber 4. The shielding unit 40 includes an upstream shielding unit 40A and a downstream shielding unit 40B. Since the upstream shielding unit 40A and the downstream shielding unit 40B have the same configuration, the downstream shielding unit 40B will be described and the description of the upstream shielding unit 40A will be omitted in the description below.

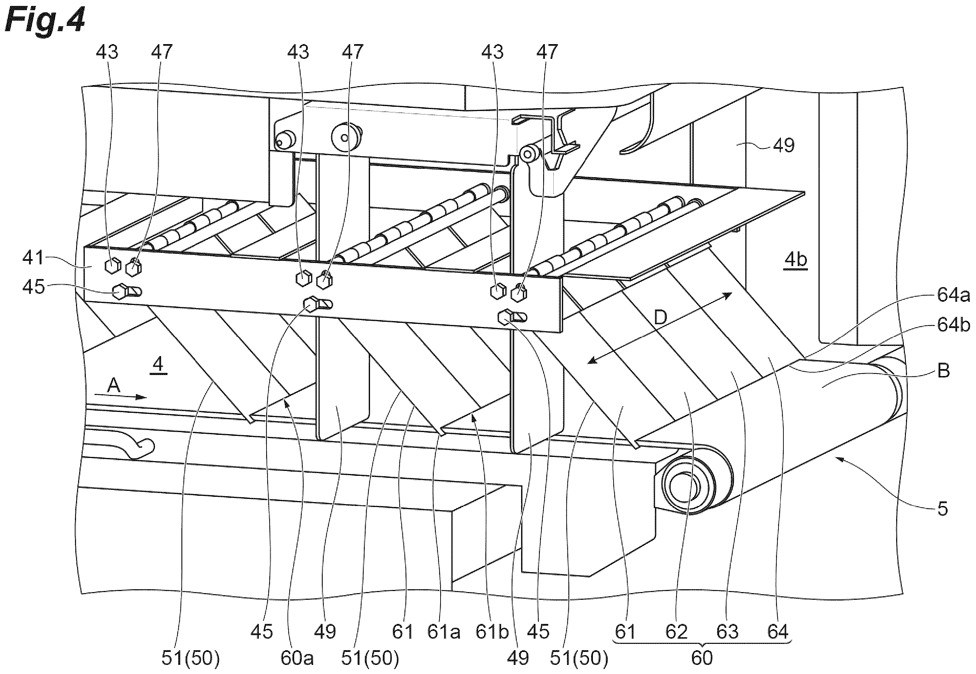

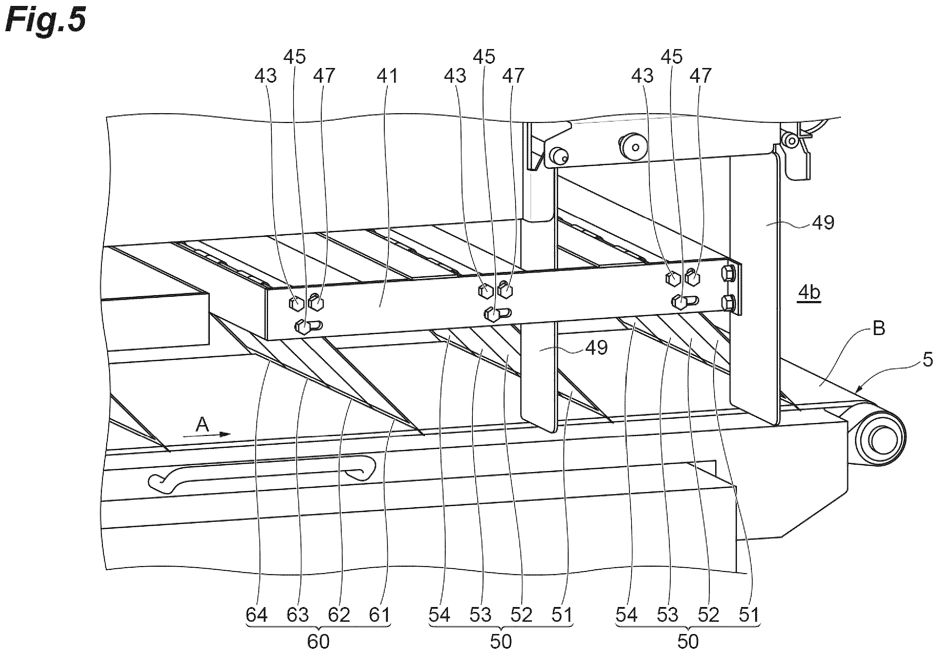

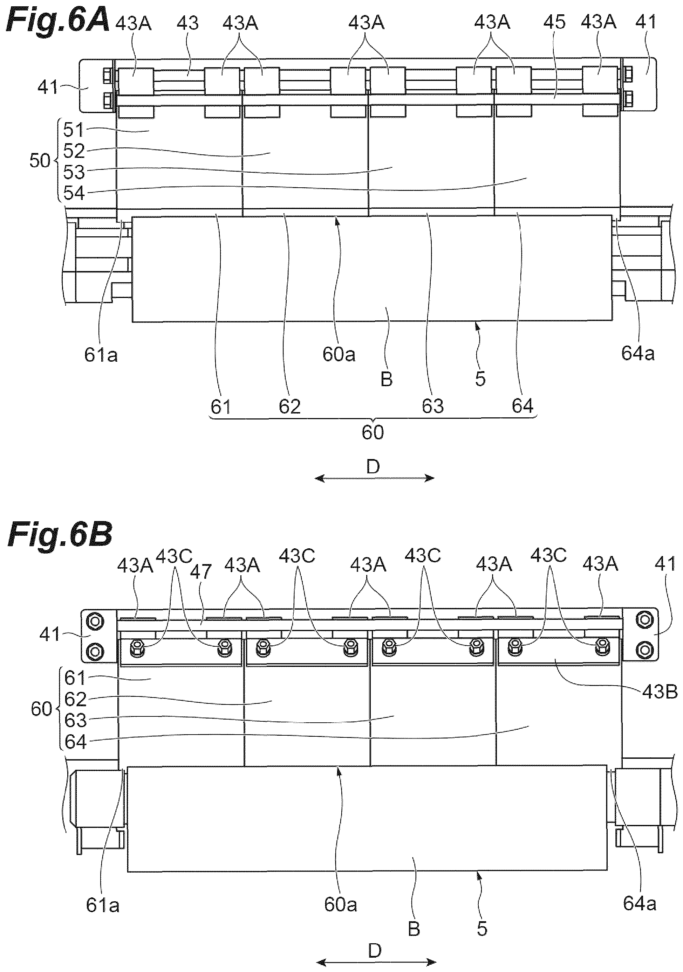

As shown in FIGS. 4, 5, 6A, and 6B, the shielding unit 40B includes three sets each having the same structure, each set including a support shaft 43, a shielding plate (front member) 50, a shielding sheet (X-ray shielding member) 60, a first regulating member 45, and a second regulating member 47, and a pair of partition walls 49.Three sets of the support shaft 43, the shielding plate 50, the shielding sheet 60, the first regulating member 45, and the second regulating member 47 are supported by the support frame 41. The support frame 41 is detachably fixed to the device main body 2. he support frame 41 is able to have its attachment position in the vertical direction relative to the device main body 2 adjusted.

The support shaft 43 extends in the width direction D. The support shafts 43 are inserted into holes formed in the support frames 41 spaced apart in the width direction D and are supported by the support frames 41. The shielding sheet 60 and the shielding plate 50 are rotatably suspended from the support shaft 43. The support shaft 43 is disposed above the conveying path 4c along which the article G is conveyed into and conveyed out from the inspection chamber 4.

The shielding sheet 60 is a flexible member that prevents X-rays from leaking from the conveying path 4c. The shielding sheet 60 is formed of, for example, a resin material such as polyolefin or rubber containing tungsten for shielding X-rays. The shielding sheet 60 of this embodiment has a thickness of, for example, 0.1 mm to 3.0 mm. The shielding sheets 60 are arranged in the width direction D along the support shaft 43. In this embodiment, an example will be given in which four shielding sheets 60 (shielding sheets 61, 62, 63, and 64) are arranged, but the number is not limited to four, and two, three, five or more sheets may be provided, or only one shielding sheet 60 may be provided.

The width of the shielding sheet 60 in the width direction D can be appropriately set. The end surfaces of the adjacent shielding sheets 60 may be in contact with each other without the ends in the width direction overlapping, or the ends in the width direction may be slightly overlapped. The length of the shielding sheet 60 (the length from the base end on the side fixed to the conveying path 4c (the support shaft 43 side) to the tip on the side hanging down toward the conveyor 5) is set so that its tip contacts the transport belt B of the conveyor 5, or so that there is almost no gap between its tip and the transport belt B.

The overall shape of the shielding sheet 60 composed of the shielding sheets 61, 62, 63, and 64 may be such that both left and right ends 61a and 64a in the width direction D protrude downward and the central portion 60a is concave upward. More specifically, the left and right ends 61a and 64a protrude downward below the transport surface Ba of the transport belt B in the conveyor 5, and the central portion 60a faces the transport surface Ba of the transport belt B with a small gap therebetween.

The shielding plate 50 is disposed on the upstream side of the shielding sheet 60 so as to overlap the shielding sheet 60. The shielding plate 50 is a member having higher impact resistance or abrasion resistance than the shielding sheet 60. The shielding plate 50 is formed of, for example, stainless steel, iron, titanium, or the like. The shielding plate 50 of this embodiment has a thickness of 0.1 mm to 3.0 mm. The shielding plate 50 is a plate spring and has elasticity. Further, the friction coefficient of the surface of the shielding plate 50 is smaller than the friction coefficient of the surface of the shielding sheet 60.

The shielding plates 50 are arranged in the width direction D along the support shaft 43. In this embodiment, an example will be given in which four shielding plates 50 (shielding plates 51, 52, 53, and 54) are arranged, but the number is not limited to four, and two, three, five or more shielding plates may be provided, or only one shielding plate 50 may be provided.

The width of the shielding plate 50 in the width direction D can be set appropriately. The end surfaces of the adjacent shielding plates 50 may be in contact with each other without the ends in the width direction overlapping, or the ends in the width direction may be slightly overlapped. The length of the shielding plate 50 (the length from the base end on the side fixed to the conveying path 4c (the support shaft 43 side) to the tip on the side hanging down toward the conveyor 5) is set so that its tip does not contact the transport belt B of the conveyor 5, or so that there is almost no gap between its tip and the transport belt B.

In this embodiment, the width of the shielding sheet 60 is the same as the width of the shielding plate 50, the width of the shielding sheet 60 is the same as the width of the shielding plate 50, and the number of the shielding sheets 60 arranged in the width direction D is the same as the number of the shielding plates 50 arranged in the width direction D. Further, in this embodiment, when the shielding unit 40B is viewed from the upstream side in the transport direction A, the shielding sheet 60 is disposed just behind the shielding plate 50. That is, in the shielding unit 40B of this embodiment, when the shielding unit 40B is viewed from the upstream side in the transport direction A, the shielding sheet 60 does not project from the shielding plate 50 in the width direction. Further, in this embodiment, when the shielding unit 40B is viewed from the downstream side in the transport direction A, the shielding plate 50 is disposed just behind the shielding sheet 60. That is, in the shielding unit 40B of this embodiment, when the shielding unit 40B is viewed from the downstream side of the transport direction A, the shielding plate 50 does not project from the shielding sheet 60 in the width direction. Further, in the shielding unit 40B of this embodiment, the length of the shielding sheet 60 is longer than the length of the shielding plate 50.

The shielding sheet 60 and the shielding plate 50 are supported at their base ends on the support shaft 43 via a first attachment member 43A and a second attachment member 43B to be rotatable (swingable). The first attachment member 43A is a plate-like member having a cylindrical portion through which the support shaft 43 is inserted. The second attachment member 43B is a plate-like member. The shielding sheet 60 and the shielding plate 50 are sandwiched between the first attachment member 43A and the second attachment member 43B in a mutually overlapping state, and are rotatably supported by the support shaft 43. The first attachment member 43A and the second attachment member 43B sandwich one shielding sheet 60 (shielding sheets 61, 62, 63, and 64) and one shielding plate 50 (shielding plates 51, 52, 53, and 54) which are overlapped with each other using fastening members 43C such as bolts and nuts. Furthermore, the shielding sheet 60 and the shielding plate 50 are arranged in a stacked state as described above, but there are no parts where the shielding sheet and the shielding plate are fixed to each other except where the upper ends of the shielding sheet 60 and the shielding plate 50 are fixed to each other by being pressed against each other by the first attachment member 43A and the second attachment member 43B.

The first regulating member 45 is provided on the downstream side of the support shaft 43. The first regulating member 45 is a bar-shaped member that extends in the width direction D. The first regulating member 45 maintains a tilted state so that the base end of the shielding plate 50 is located on the upstream side of the tip when viewed from the width direction D and restricts the pivoting of the shielding sheet 60 and the shielding plate 50 toward the upstream side. The shielding sheet 60 and the shielding plate 50 are restrict ed by the first regulating member 45 to be tilted at an angle of, for example, 40 to 50° (preferably 45°) with respect to the vertical plane. Hereinafter, the angle α (see FIG. 3) between the shielding sheet 60 and the shielding plate 50 restricted by the first regulating member 45 will be referred to as the regulation angle by the first regulating member 45.

The first regulating members 45 are inserted into elongated holes formed in the support frames 41 spaced apart from each other in the width direction D, and are supported by the support frames 41. The elongated hole extends in the transport direction, so that the position of the first regulating member 45 in the transport direction can be finely adjusted. By adjusting the position of the first regulating member 45 in the transport direction, the regulation angles of the shielding sheet 60 and the shielding plate 50 can be adjusted.

The second regulating member 47 is provided on the downstream side of the first regulating member 45. The second regulating member 47 is a bar shaped member extending in the width direction D. The second regulating members 47 are inserted into round holes formed in the support frames 41 spaced apart in the width direction D and supported by the support frames 41. The second regulating member 47 restricts the shielding sheet 60 and the shielding plate 50 from pivoting downstream by a predetermined angle α (for example, 80°) or more. More specifically, the shielding sheet 60 and the shielding plate 50 are supported on the support shaft 43 by the first and second regulating members 45 and 47 so that their tips can freely rotate at an angle α relative to the vertical direction within a range of, for example, 45° or more and 70° or less.

The shielding sheet 60 and the shielding plate 50 are easily swung (lifted up and rotated counterclockwise (left) in the figure) when their tips come into contact with the article G transported by the conveyor 5, and return to their original reference position (a state in which the restricted angle is maintained) under their own weight after the article G has passed. In the shielding sheet 60 and the shielding plate 50 in this state, the second regulating member 47 restricts the shielding sheet 60 and the shielding plate 50, which are pushed out and rotated by the article G transported by the conveyor 5, from pivoting more than a predetermined angle α.

A pair of partition walls 49 are arranged at both left and right ends in the width direction D of the two sets of the support shaft 43, the shielding plate 50, the shielding sheet 60, the first regulating member 45, and the second regulating member 47 on the downstream side among three sets of the support shaft 43, the shielding plate 50, the shielding sheet 60, the first regulating member 45, and the second regulating member 47. The pair of partition walls 49 are members for preventing leakage of X-rays. The pair of partition walls 49 are formed of a metal material such as stainless steel. The pair of partition walls 49 are arranged at the same position as the shielding sheet 60 or slightly downstream in the transport direction A. The pair of partition walls 49 are arranged at a distance in the width direction D that is slightly shorter than the length of the shielding sheet 60 in the width direction D. In other words, the partition wall 49 and the shielding sheet 60 may be disposed so as to overlap each other in the width direction D. Furthermore, the partition wall 49 and the shielding sheet 60 may be disposed with a small gap therebetween in the width direction D.

The effects of the X-ray inspection apparatus 1 of the above-described embodiment will be described. In the X-ray inspection apparatus 1 of the above-described embodiment, since the shielding plate 50 having impact resistance or abrasion resistance is provided on the upstream side of the shielding sheet 60, the frequency with which the article G transported from the upstream side directly contacts the shielding sheet 60 is reduced. Accordingly, the possibility of the shielding sheet 60 being damaged can be reduced. As a result, X-ray leakage can be prevented. Further, the risk of the damaged shielding sheet 60 becoming a foreign matter in the article G to be inspected can be reduced. In other words, the risk of foreign matter being mixed into the article G to be inspected can be reduced. In particular, when inspecting the article G having corners, a significant effect can be obtained.

The shielding plate 50 of the X-ray inspection apparatus 1 of the above-described embodiment is a thin plate-like plate spring member formed of a metal material. In this configuration, the shielding plate 50 is made a thin plate and can be restored to its original shape even if the shielding plate is deformed by collision with the article G. Further, since the shielding plate 50 can be made a thin plate, the impact when the shielding plate 50 collides with the article G is reduced, and the transportation of the article G can be stabilized.

In the X-ray inspection apparatus 1 of the above-described embodiment, the friction coefficient of the surface of the shielding plate 50 is smaller than the friction coefficient of the shielding sheet 60. Accordingly, the shielding plate 50 can be easily formed to have impact resistance or abrasion resistance compared to the shielding sheet 60.

In the X-ray inspection apparatus 1 of the above-described embodiment, the shielding plate 50 is suspended from the conveying path 4c, and the length of the shielding plate 50 extending from the base end fixed to the conveying path 4c to the tip hanging down to the conveyor 5 side is shorter than the length of the shielding sheet 60 extending from the base end to the tip. Accordingly, the lower end of the shielding plate 50 can be caused not to be in contact with the transport belt B of the conveyor 5 while the lower end of the shielding sheet 60 is in contact with the transport belt B of the conveyor 5. As a result, it is possible to prevent the leakage of X-rays while reducing the abrasion of the lower end of the shielding plate 50.

The X-ray inspection apparatus 1 of the above-described embodiment includes the first regulating member 45 that maintains the shielding plate 50 in an tilted state such that the base end is located on the upstream side of the tip when viewed from the width direction (the front of the device), and restricts rotation toward the upstream side. That is, in the X-ray inspection apparatus 1 of the above-described embodiment, the shielding plate 50 and the shielding sheet 60 are maintained at a regulation angle. In the X-ray inspection apparatus 1 of the above-described embodiment, since the shielding plate 50 and the shielding sheet 60 are pressed by the first regulating member 45 from the beginning, the passage of the article G is further improved.

More specifically, in the X-ray inspection apparatus 1 of the above-described embodiment, the article G transported by the conveyor 5 first contacts the shielding sheet 60. In a conventional X-ray inspection apparatus in which only the shielding sheet 60 that hangs down vertically is provided, the tip of the shielding sheet 60 comes into contact with the article G transported by the conveyor 5. Therefore, a strong centrifugal force acts on the shielding sheet 60. Accordingly, since the shielding sheet 60 is flipped up too much so that a large impact is applied to the article G, the risk that the article G falls over increases. In contrast, on the shielding sheet 60 and the shielding plate 50 of the X-ray inspection apparatus 1 of the above-described embodiment in an tilted state, the article G comes into contact with a portion near the center in the longitudinal direction. Therefore, the centrifugal force acting on the shielding sheet 60 and the shielding plate 50 is small (that is, the shielding sheet 60 and the shielding plate 50 are not flipped up too much). In addition, since the impact when the article G comes into contact with the shielding sheet 60 and the shielding plate 50 is also reduced, the risk that the article falls over can be reduced. Further, in the X-ray inspection apparatus 1 of the above-described embodiment, since the tip of the shielding sheet 60 is in contact with the transport belt B, a frictional force is generated. Accordingly, the risk that the tip of the shielding sheet 60 is flipped up too much can be reduced.

In the X-ray inspection apparatus 1 of the above-described embodiment, the second regulating member 47 restricts the shielding sheet 60 and the shielding plate 50 from pivoting downstream by more than a predetermined angle. Accordingly, it is possible to reduce the deterioration of the effect of suppressing leakage of X-rays due to the shielding sheet 60 and the shielding plate 50 pivoting more than necessary. Further, if the shielding sheet 60 and the shielding plate 50 are rotated by the article G, the conveying path is opened to the outside, and the effect of suppressing leakage of X-rays is reduced. For this reason, it is necessary to lengthen the interval at which the articles G are transported in order to return the rotational state of the shielding sheet 60 and the shielding plate 50 to the reference position. In the X-ray inspection apparatus 1 of the above-described embodiment, since the shielding sheet 60 and the shielding plate 50 are restricted not to rotate more than necessary, the time required for the shielding sheet 60 and the shielding plate 50 to return to the reference position is shortened, and the transport interval of the articles G can be shortened. As a result, the inspection capability of the X-ray inspection apparatus 1 can be improved.

Although an embodiment has been described above, an aspect of the present invention is not limited to the above-described embodiment, and various modifications are possible without departing from the spirit and scope of the present invention.

In the above-described embodiments, although an example has been described in which the shielding plate 50 has higher impact resistance or abrasion resistance than the shielding sheet 60, the shielding plate 50 may have higher impact resistance and abrasion resistance than the shielding sheet 60.

In the above-described embodiments and modified examples, although an example has been described in which the entirety of the shielding plate 50 is formed of a metal material, the present invention is not limited thereto. For example, at least the outer surface of the shielding plate 50 may be formed of a metal material. For example, the shielding plate 50 may be formed by a base material which is formed of polyolefin, rubber, or the like and a cover member that covers the entire outer surface of the base material or a part of the outer surface with which the article G is expected to come into contact and is formed of a metal material such as stainless steel, iron, or titanium. Even in this case, it is possible to easily form the shielding plate 50 that has improved impact resistance or abrasion resistance than the shielding sheet 60.

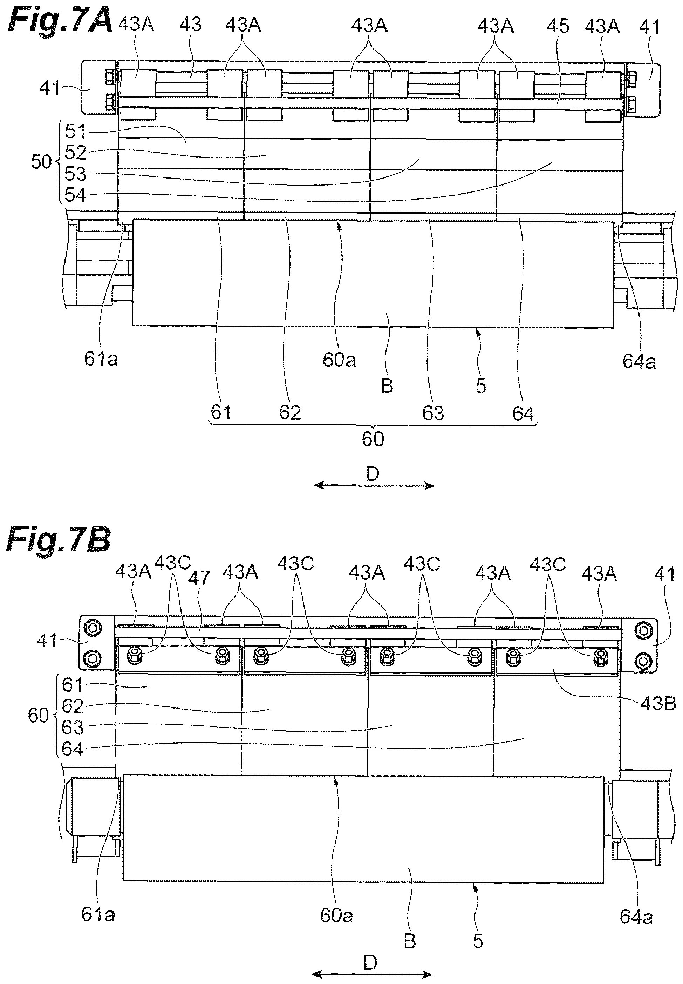

In the above-described embodiments and modified examples, although an example has been described in which the shielding plates 50 and the shielding sheets 60 are formed to have the same number and size as each other, the present invention is not limited thereto. For example, the sheets may have the same size, may be arranged shifted from each other in the width direction, or may be arranged in different numbers. For example, as shown in FIGS. 7A and 7B, only the shielding sheet 60 may be sandwiched between two first attachment members 43A and the second attachment member 43B, the shielding sheet 60 may be suspended from the support shaft 43, and the shielding plate 50 may be affixed only to the approximate center portion in the longitudinal direction of the shielding sheet 60. The location where the shielding plate 50 is affixed can be changed as appropriate to match the location where the transported article G is to first come into contact with the shielding sheet 60.

In the above-described embodiments and modified examples, the shielding unit 40 includes six sets of the support shaft 43, the shielding plate 50, the shielding sheet 60, the first regulating member 45, and the second regulating member 47 having the same configuration as a whole, the shielding unit 40A includes only one set of the support shaft 43, the shielding plate 50, the shielding sheet 60, the first regulating member 45, and the second regulating member 47 provided in the entrance opening 4a, and the shielding unit 40B includes only one set of the support shaft 43, the shielding plate 50, the shielding sheet 60, the first regulating member 45, and the second regulating member 47 provided in the exit opening 4b.

In the above-described embodiments and modified examples, although an example has been described in which six sets of the support shaft 43, the shielding plate 50, the shielding sheet 60, the first regulating member 45, and the second regulating member 47 having the same configuration are detachably arranged on the device main body 2 via the support frame 41, the attachment structure is not limited, and they may be directly fixed to the device main body 2.

In the above-described embodiments and modified examples, although an example has been described in which the first regulating member 45 is provided, the arrangement of the first regulating member 45 may be omitted. That is, the shielding plate 50 and the shielding sheet 60 may not be provided while being tilted relative to the vertical plane. Further, the arrangement of the second regulating member 47 may be also omitted in addition to the first regulating member 45. Further, an elastic member such as a coil spring or a torsion spring may be provided between the base end of the shielding plate 50 and the support shaft 43. Similarly, an elastic member such as a coil spring or a torsion spring may be provided between the base end of the shielding sheet 60 and the support shaft 43.

In the above-described embodiments and modified examples, although an example has been described in which the shielding plate 50 is formed of a material capable of shielding X-rays, the shielding plate may be formed of a material that is not capable of shielding X-rays as long as the shielding plate has higher impact resistance or abrasion resistance than the shielding sheet 60.

In the above-described embodiments and modified examples, although an example has been described in which the conveyor 5 is provided, the shielding unit 40 may also be applied to an apparatus that is not used in conjunction with the conveyor 5, for example, in which the article G is manually introduced into the inspection chamber 4 by an operator.

In the above-described embodiments, although an example has been described in which the shielding sheet 60 and the shielding plate 50 are arranged in a stacked state (close contact state) with no gaps therebetween, they may also be arranged with a small gap therebetween in the transport direction A.

## Claims

1. An X-ray inspection apparatus comprising:
a conveying unit configured to transport an article along a transport direction;
an X-ray irradiation unit configured to irradiate the article with X-rays, the article having been transported to an inspection area by the conveying unit;
an X-ray detection unit configured to detect the X-rays transmitted through the article;
an inspection unit configured to inspect the article based on a detection result of the X-ray detection unit;
a flexible X-ray shielding member configured to prevent the X-rays from leaking from a conveying path for conveying the article into the inspection area or conveying the article out from the inspection area, the flexible X-ray shielding member being suspended from the conveying path; and
a front member disposed on an upstream side of the X-ray shielding member with respect to the transport direction so as to overlap the X-ray shielding member and having higher impact resistance and/or abrasion resistance than the X-ray shielding member.

2. The X-ray inspection apparatus according to claim 1,
wherein at least an outer surface of the front member is formed of a metal material.

3. The X-ray inspection apparatus according to claim 1,
wherein the front member is a thin plate-like plate spring member formed of a metal material.

4. The X-ray inspection apparatus according to any one of claims 1 to 3,
wherein a friction coefficient of a surface of the front member is smaller than a friction coefficient of the X-ray shielding member.

5. The X-ray inspection apparatus according to any one of claims 1 to 4, wherein
the front member is suspended from the conveying path, and
a length of the front member is shorter than a length of the X-ray shielding member,
the length of the front member being from a base end on a fixed side to a tip on a hanging side,
the length of the X-ray shielding member being from a base end on a fixed side to a tip on a hanging side.

6. The X-ray inspection apparatus according to claim 5, further comprising:
a pivoting shaft configured to rotatably support the X-ray shielding member and the front member and extending in a width direction intersecting with both the transport direction of the conveying unit in the conveying path and a vertical direction; and
a first restricting member
provided on a downstream side of the pivoting shaft with respect to the transport direction,
configured to maintain the front member in a tilted state in that the base end of the front member is located on the upstream side of the tip with respect to the transport direction when viewed from the width direction, and
configured to restrict rotation of the front member toward the upstream side.

7. The X-ray inspection apparatus according to claim 6, further comprising:
a second restricting member provided on the downstream side of the first restricting member with respect to the transport direction, and configured to restrict the front member from pivoting downstream with respect to the transport direction at a predetermined angle or more.
